# EUROPÄISCHE PATENTSCHRIFT

(11) **EP 0 620 968 B1**
(45) Veröffentlichungstag und Bekanntmachung des Hinweises auf die Patenterteilung: **28.01.1998**
(21) Anmeldenummer: 94104989.2
(22) Anmeldetag: 29.03.1994
(51) Int. Cl.: A01K 1/06

(54) **Einsperrgitter mit nur einer Steuerstange**
Feed rack with only one control rod
Cornadis avec arbre de commande solitaire

(30) Priorität: 29.03.1993 DE 9304770 U
(43) Veröffentlichungstag der Anmeldung: 26.10.1994
(73) Patentinhaber: BRAUN GmbH, 83620 Feldkirchen/Westerham (DE)
(72) Erfinder: Braun, Josef, D-83620 Feldkirchen/Westerham (DE); Braun, Hans, D-83620 Feldkirchen/Westerham (DE)
(74) Vertreter: Alber, Norbert

(56) Entgegenhaltungen:
- DE-A- 1 607 248
- DE-A- 3 321 452
- FR-A- 2 442 582
- FR-A- 2 580 464
- NL-A- 9 000 107
- US-A- 4 976 224

## Beschreibung

Die Erfindung betrifft Einsperrgitter für Viehställe, mit denen das Vieh in nebeneinanderliegenden Freßpositionen nach dem freien Lauf mit dem Hals zwischen zwei Elementen, meist Stahlrohren, in der Freßposition festgehalten werden soll. Ein solches Einsperrgitter besteht üblicherweise aus einem Rahmen, der aus einem oberen und unteren Querrohr besteht, sowie über in Abständen senkrecht dazwischen angeordnete Rohre. Innerhalb dieses Rahmens sind verschwenkbare, im wesentlichen senkrecht verlaufende Rohre so angeordnet, daß sie in einer Offenstellung gegenüber einem festen, senkrecht stehenden Gegenhalter einen großen Abstand einnehmen, so daß das Vieh seinen Kopf hindurch stecken kann, und in der Schließstellung an diesen Gegenhalter soweit angenähert wird, daß ein Zurückziehen des Kopfes des Tieres nicht mehr möglich ist. Vorzugsweise dienen dabei die senkrechten Rohre des Rahmens als Gegenhalter.

Dabei sind die Fangrohre meist nicht direkt gegenüber dem festen Rahmen verschwenkbar gelagert, sondern gegenüber einem Basisrohr, welches seinerseits erst gegenüber dem festen Rahmen und zwar vorzugsweise gegenüber dem unteren Querrohr des festen Rahmens verschwenkbar ist.

Dadurch kann einerseits das Basisrohr von einer am weitesten vom Gegenhalter entfernten Position (Offenstellung) in eine vom Gegenhalter nächstliegende Position (Bereitschaftsstellung) gebracht werden.

Andererseits kann, sofern sich das Basisrohr in der Bereitschaftsstellung befindet, das Fangrohr wiederum von einer oben vom Gegenhalter entfernten Schwenklage (Offenstellung) in eine oben zum Gegenhalter nächstliegende Schwenklage (Schließstellung) überführt werden, in welcher dann der Hals des Tieres eingesperrt ist. In diese Lage wird das Fangrohr durch den sich zum Futter hin absenkenden Hals des Tieres geschoben. Befindet sich dagegen das Basisrohr in seiner Bereitschaftsstellung, wird das Fangrohr zwangsweise ebenfalls in seiner Offenstellung gehalten, indem dann ein Teil des Fangrohres an einem entsprechenden Anschlag, beispielsweise dem unteren Teil des Basisrohres, bereits anliegt.

Für diese bekannte Konstruktion sind bisher zwei über das gesamte Einsperrgitter quer verlaufende, meist im Bereich des oberen Querraumes angeordnete Steuerstangen notwendig, von denen eine das Basisrohr von der Offenstellung in die Bereitschaftsstellung verschieben kann und die andere das Fangrohr von der Offenstellung in die Schließstellung.

Eine derartige Konstruktion mit nur einer Steuerstange zeigt die US-A-4976,224, wobei im Bewegungsweg des Fangrohres zwischen dessen Offenstellung und dessen Schließstellung eine Nase angeordnet ist, die das Fangrohr in der Schließstellung hält, und wobei durch Bewegung der Steuerstange das Fangrohr die Nase in Richtung auf seine Offenstellung überwinden kann. Die Basisrohre sind an ihrem oberen Ende jedoch nicht gelenkig mit der Steuerstange verbunden.

Es ist daher die Aufgabe gemäß der Erfindung, ein Einsperrgitter zu schaffen, welches möglichst einfach, insbesondere mit möglichst wenig Teilen, deren Gestalt sich in Abhängigkeit von der Anzahl der Boxen ändert, aufgebaut ist und eine zuverlässige Funktion gewährleistet.

Diese Aufgabe wird bei einem gattungsgemäßen Einsperrgitter durch die kennzeichnenden Merkmale des Anspruchs 1 gelöst. Vorteilhafte Ausführungsformen ergeben sich aus den Unteransprüchen.

Bei einem gattungsgemäßen Einsperrgitter ist es möglich, mit nur einer Steuerstange im Bereich der oberen Querstange auszukommen, indem die Verriegelung des Fangrohres in der Schließstellung bei Auslösung durch das Vieh selbsttätig vonstatten geht, und indem die Entriegelung und Verbringung des Fangrohres in eine Offenstellung durch Bewegung der Steuerstange, evtl. unter Vermittlung des Basisrohres, geschieht.

Zu diesem Zweck ist im Bereich des unteren Endes des Fangrohres in dessen Bewegungsweg eine Nase fest am Einsperrgitter oder dessen Umgebung angeordnet, welches zur Schließstellung des Fangrohres hin eine senkrechte Gegenfläche aufweist, zur Offenstellung hin dagegen eine schräge Auflauffläche, wodurch das Fangrohr in der Schließstellung arretiert wird.

Zusätzlich ist der Teil des Fangrohres, welcher sich unterhalb der Schwenkachse zwischen Fangrohr und Basisrohr befindet, längenveränderbar ausgestaltet, so daß das untere Ende des Fangrohres aufgrund der Schwerkraft bzw. zusätzlicher Federkraft beim Verschwenken des Fangrohres keinen Bogen beschreiben, sondern immer entlang einer darunter angeordneten Kontur, beispielsweise der Oberseite des unteren Querrohres, entlanggleiten würde. Dies ist jedoch ohne fremde Hilfe nur bis zur senkrechten Anschlagfläche der dort angeordneten Nase möglich.

Zusätzlich ist das Basisrohr nicht in seiner Querschnittsmitte am unteren Ende gegenüber dem unteren Querrohr des Rahmens des Einsperrgitters gelagert, sondern auf seiner vom Fangrohr abgewandten Seite. Dadurch beschreibt beim Verschwenken des Basisrohres die dem Fangrohr zugewandte Kante des unteren Endes des Fangrohres eine Bogenbewegung, wobei der Abstand zur Lagerung zwischen Basisrohr und unterem Querrohr als Hebelarm wirkt.

An der dem Fangrohr zugewandten Seite des Basisrohres ist an dessen unterem Ende ein Vorsprung angeordnet, auf welchem das untere Ende des Fangrohres aufsitzen kann, wenn sich die unteren Teile von Fangrohr und Basisrohr in paralleler Anlage zueinander befinden, was der Fall ist, wenn sich das Fangrohr in der Schließstellung und das Basisrohr in der Bereitschaftsstellung befinden. Wird von dieser Position aus das Basisrohr mittels der Steuerstange in seine Offenstellung verschwenkt, so hebt der Vorsprung am unteren Ende des Basisrohres das längsverschiebliche untere Ende des Fangrohres aufgrund seiner Bogenbewegung über die senkrechte Anschlagfläche der Nase hinweg.

Gleichzeitig wird - durch entsprechend tiefe Anordnung des Lagerpunktes zwischen Fangrohr und Basisrohr in der unteren Hälfte des Fangrohres und im wesentlichen senkrechter Lage des Fangrohres bei Beginn dieser Bewegung, also in der Schließstellung des Fangrohres - der Schwerpunkt des Fangrohres nicht nur zur Seite, sondern auch nach unten verlagert.

In der Offenstellung des Fangrohres ist daher eine geringfügige Bewegungsumkehr des Basisrohres mittels der Steuerstange möglich, wobei das Fangrohr in seiner Schräglage mit tiefliegendem Schwerpunkt verbleibt und der Vorsprung am unteren Ende des Basisrohres unter dem unteren Ende des Fangrohres wegschwenkt, da die dort auftretende Gleitreibung zu gering ist, als daß hierdurch das Fangrohr nicht zu einer Anhebung seines Schwerpunktes veranlaßt wird. In der Folge nimmt das längenveränderliche untere Ende des Fangrohres die am weitesten vorgeschobene Lage ein, wird also bis auf das untere Querrohr - oder falls nicht vorhanden, die Kontur des Untergrundes - herabgleiten.

Im weiteren Verlauf kann das Basisrohr weiter zurückbewegt, also in seine Bereitschaftsstellung gebracht werden, bis das obere Ende des Basisrohres im oberen Bereich des Fangrohres annähernd anliegt. Dann nimmt das Basisrohr seine Bereitschaftsstellung ein, während sich das Fangrohr noch in der Offenstellung befindet.

Von dieser Stellung aus wird das einzelne Fangrohr in die Schließstellung verbracht, wenn das Vieh seinen Kopf durch das Einsperrgitter gesteckt hat und zum Futter hin absenkt, wodurch das untere Ende des Fangrohr wieder zum Basisrohr hingedrückt wird und in seine Schließstellung gerät und dort mittels der beschriebenen Nase selbsttätig einrastet.

Dadurch kann das gesamte Einsperrgitter mit nur einer Steuerstange betrieben werden, was einerseits die Handhabung erheblich vereinfacht und andererseits den baulichen Aufwand reduziert.

Die Längenveränderbarkeit des unteren Endes des Fangrohres wird besonders einfach durch ein im Fangrohr angeordnetes Innenrohr erzielt, welches aus dem unteren offenen Ende des Fangrohres herausgleiten und eventuell gegenüber dem Fangrohr durch eine zusätzliche Druckfeder, die im Inneren des Fangrohres angeordnet sein kann, zusätzlich zur Schwerkraft des Innenrohres unterstützt wird.

Um das Herabgleiten des unteren Endes des Fangrohres bzw. dessen Innenrohres von dem Vorsprung des Basisrohres zu erleichtern, ist dieser Vorsprung schräg zur Richtung des Fangrohres bzw. Basisrohres angeordnet, um die Gleitreibung zu vermindern. Da bei Benutzung einer solchen schrägen Gestaltung eine Drehung des Innenrohres im Fangrohr verändert werden muß, hier empfiehlt es sich, wenigstens das Innenrohr nicht als Rundrohr, sondern mit eckigem Außenumfang auszubilden und durch entsprechende Führungen im Basisrohr am Verdrehen zu hindern.

Der bauliche Aufwand wird weiter dadurch vermindert, daß die Lagerung des unteren Endes des Basisrohres sowie die Anordnung der Nase für das Fangrohr nicht direkt auf dem Untergrund oder dem unteren Querrohr des Rahmens erfolgt, sondern auf einer Muffe in Form eines Rohrstückes, welche über das untere Basisrohr geschoben und dort in geeigneter Position fixiert werden kann. Um das obere Ende des Fangrohres auch entlang dem oberen Querrohr des Einsperrgitters zu führen und nicht der Krafteinwirkung des Viehs auszusetzen, ist am oberen Ende des Fangrohres ein nach oben offenes U-Profil oder eine Halbschale angeordnet, welches das obere Querrohr in jeder Lage des Fangrohres wenigstens teilweise umgreift.

Eine andere Lösung besteht darin, daß das Einrasten des Fangrohres in der Schließstellung nicht am unteren Ende des Fangrohres vorgenommen wird, sondern am oberen Ende des Fangrohres, welches dort als U-Gabel ausgebildet ist und sich bis über die Steuerstange hinwegerstreckt. Selbstverständlich kann anstelle der Gabeln an den oberen Enden von Fangrohr und Basisrohr, in denen die Steuerstange bzw. das Querrohr laufen, eine Anordnung von Steuerstange und Querrohr einerseits sowie Basisrohr und/oder Fangrohr andererseits nebeneinander gewählt werden.

Ausschlaggebend bei der anderen Lösung ist die Tatsache, daß sich an der Steuerstange, vorzugsweise auf deren Oberseite, die Nase befindet, gegenüber welcher das Fangrohr einrasten muß.

Zu diesem Zweck ist als Verriegelungseinrichtung in dem gabelförmigen oberen Ende des Fangrohres entweder ein Querbolzen geführt, der sich durch zwei fluchtende, im wesentlichen senkrecht verlaufenden Langlöcher in den Holmen der U-Gabel auf und ab bewegen kann und bei der Bewegung von der Offenstellung in die Schließstellung über die Schräge der Nase hinter der in senkrechter Anschlagfläche einrastet.

Ebenso kann anstelle der Wirkeinheit aus Querbolzen und Langlöchern eine Klappe benutzt werden, die gelenkig zwischen den Holmen der U-Gabel am oberen Ende des Fangrohres gelagert ist, wobei die Klappe auch etwa waagerecht gegen die Nase abstrebt, jedoch über eine etwa waagerechte Lage nicht herabhängen kann aufgrund eines Anschlages am oberen Ende des Fangrohres.

Auch diese Klappe ist in einer solchen Höhe am Fangrohr gelagert, daß die Klappe beim Bewegen des Fangrohres von der Offenstellung in die Schließstellung über die aufsteigende Schräge der Nase anssteigt und hinter der Nase in der Schließstellung einrastet.

Ein Öffnen des Einsperrgitters erfolgt - bei einer Lösung mit Fangrohr und Basisrohr - dadurch, daß zunächst die Basisrohre von ihrer Bereitschaftstellung in die Offenstellung bewegt werden und dadurch auch die gesamte Steuerstange mitsamt der darauf befindlichen, verriegelnden Nase für das Fangrohr vom Fangrohr zurückgezogen wird. Dadurch kann das Fangrohr wieder von der Schließstellung in seine Offenstellung verschwenkt werden, wobei die Lagerachse der Klappe bzw. die Langlöcher, in denen der Querbolzen verschiebbar ist, eine bogenförmig ansteigende Bewegung vollziehen, da diese Elemente in der Offenstellung eine höhere Lage einnehmen als in der Schließstellung.

Dadurch können die Riegelelemente (Klappe oder Querbolzen im Langloch) über die zurückgezogene Nase hinwegverschwenkt werden, so daß sich das Fangrohr wieder in der Offenstellung befindet.

Ausführungsformen der Erfindung sind im Folgenden beispielhaft näher beschrieben. Es zeigen:
- Fig. 1: eine Frontansicht des Einsperrgitters mit dem Fangrohr in Schließstellung und dem Basisrohr in Bereitschaftsstellung,
- Fig. 2: eine ebensolche Darstellung, während sich Fangrohr und Basisrohr gemeinsam in der Offenstellung befinden,
- Fig. 3: den Zustand, nachdem das Basisrohr weiter bis zu seiner Bereitschaftsstellung bewegt wurde,
- Fig. 4: eine Frontansicht eines anderen Einsperrgitters mit dem Fangrohr in Schließstellung und dem Basisrohr in Bereitschaftsstellung,
- Fig. 5: eine Darstellung gemäß Fig. 4, während sich Fangrohr und Basisrohr gemeinsam in der Offenstellung befinden,
- Fig. 6: das Einsperrgitter gemäß Fig. 4 und 5, bei dem sich das Basisrohr in der Bereitschaftstellung befindet,

In allen Figuren ist übereinstimmend der Rahmen 2 des Einsperrgitters 1, bestehend aus oberem und unterem Querrohr 3 bzw. 3' sowie senkrechten, festen Rohren, den Gegenhaltern 4, zu erkennen, wobei für jede Box ein Gegenhalter 4 vorhanden sein muß.

Ebenso muß für jede Box ein Fangrohr 6 und ein Basisrohr 5 vorhanden sein.

Die Basisrohre 5 weisen am oberen Ende eine Gabel 19 auf, welche das obere Querrohr 3 umgreift und oberhalb des Querrohres 3 gelenkig mit der quer über mehrere Boxen verlaufenden Steuerstange 7 verbunden sind. Das Basisrohr 5 selbst ist etwa S-förmig mit in sich geraden oberen und unteren sowie Mittelteil gebogen. Das untere Ende des Basisrohres 5 ist mittels einer Lagerung 13 gegenüber einem Rohrstück 14 gelagert, welches als Muffe über das untere Querrohr 3' geschoben und dort mittels nicht dargestellter Fixierschrauben justiert werden kann.

Das Fangrohr 6 weist einen Knick im oberen Drittel auf, und ist im oberen und unteren Bereich jeweils in sich gerade. In der unteren Hälfte ist es gegenüber dem Basisrohr 5 in einer Lagerung 10 verschwenkbar gelagert, wobei sämtliche Lagerungen, also zwischen Basisrohr und Fangrohr, zwischen Basisrohr und Muffe 14 und zwischen Basisrohr 5 und Steuerstange 7 mit einer Schwenkachse quer zur Ebene des Einsperrgitters angeordnet sind, so daß alle Schwenkbewegungen in der Ebene des Einsperrgitters erfolgen.

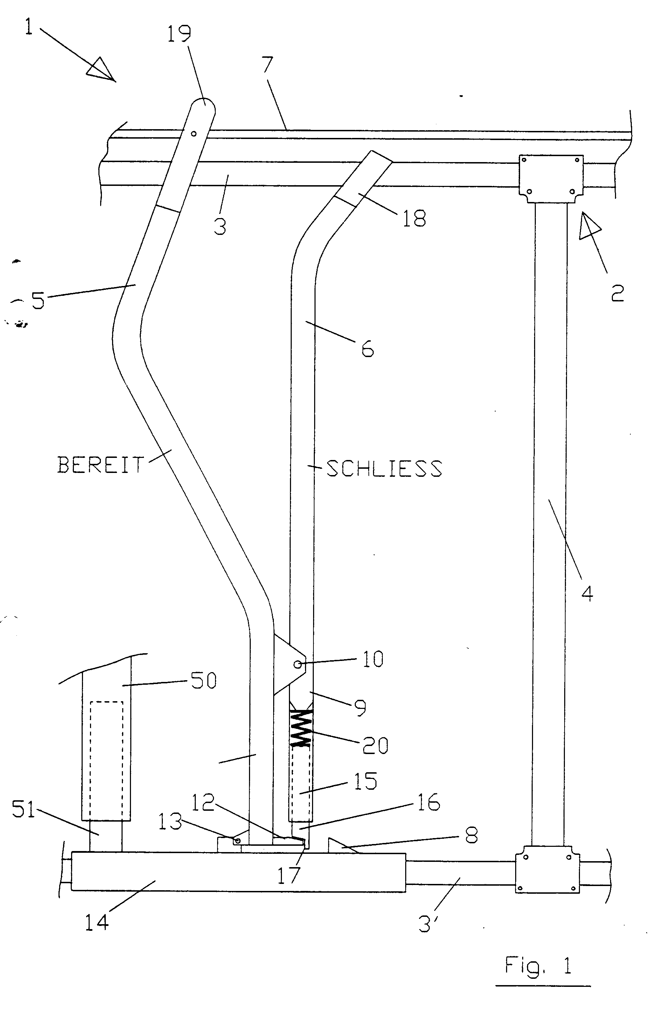

Wie in Figur 1 dargestellt, befindet sich das Fangrohr 6 in einer Schließstellung mit seinem unteren Ende hinter der senkrechten Anschlagfläche der Nase 8 eingerastet, wobei in dieser Stellung der untere Teil und damit der größte Teil des Fangrohres sich im wesentlichen senkrecht stehend erstreckt. Die U-Gabel 18 am oberen Ende des Fangrohres 6 umgreift - wie in jeder Stellung des Fangrohres 6 - wenigstens teilweise das obere Querrohr 3 von unten her.

In dieser Stellung könnte ein Tier, welches seinen Hals zwischen dem Fangrohr 6 und dem Gegenhalter 4 hat, den Kopf nicht mehr aus dem Einsperrgitter zurückziehen.

In der in Figur 1 dargestellten Lage befindet sich das Basisrohr 5 in der Bereitschaftsstellung, wobei der untere Teil des S-förmigen Fangrohres 5 etwa senkrecht und damit parallel und nahe zum unteren Teil des Fangrohres 6 verläuft und auch der obere Teil mit der Gabel 19 annähernd senkrecht steht.

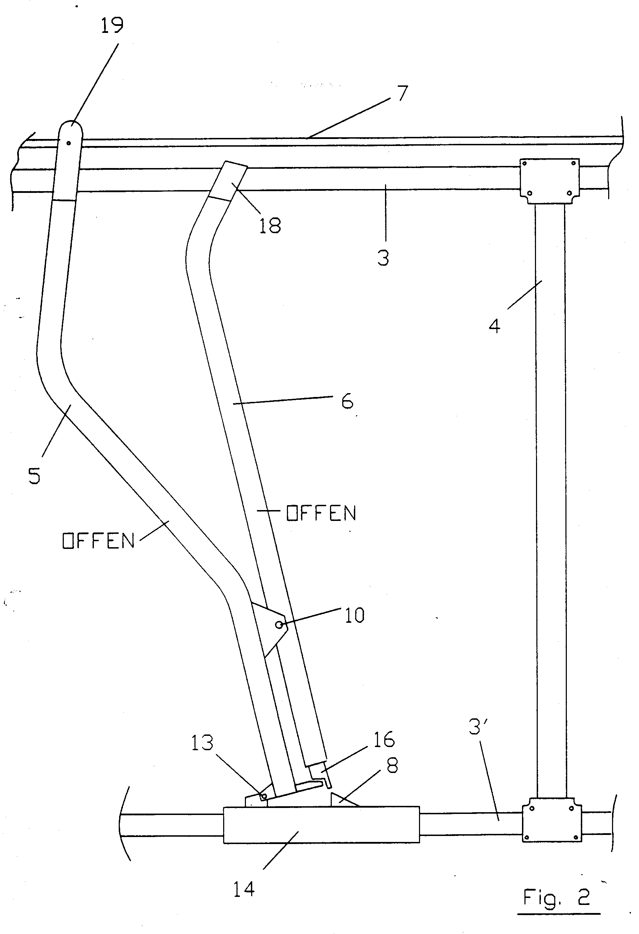

Wird von dieser Stellung aus das Basisrohr 5 durch Verschiebung der Steuerstange 7 nach links verschwenkt, so hebt der Vorsprung 12 am unteren Ende des Basisrohres 5 das Innenrohr 15 gegen die Schwerkraft und die Kraft einer zusätzlich im Fangrohr 6 angeordneten Feder 20 an und durch die beim Verschwenken erfolgende Kreisbewegung des Vorsprunges 12 über die Nase 8 hinweg, wie in Figur 2 dargestellt.

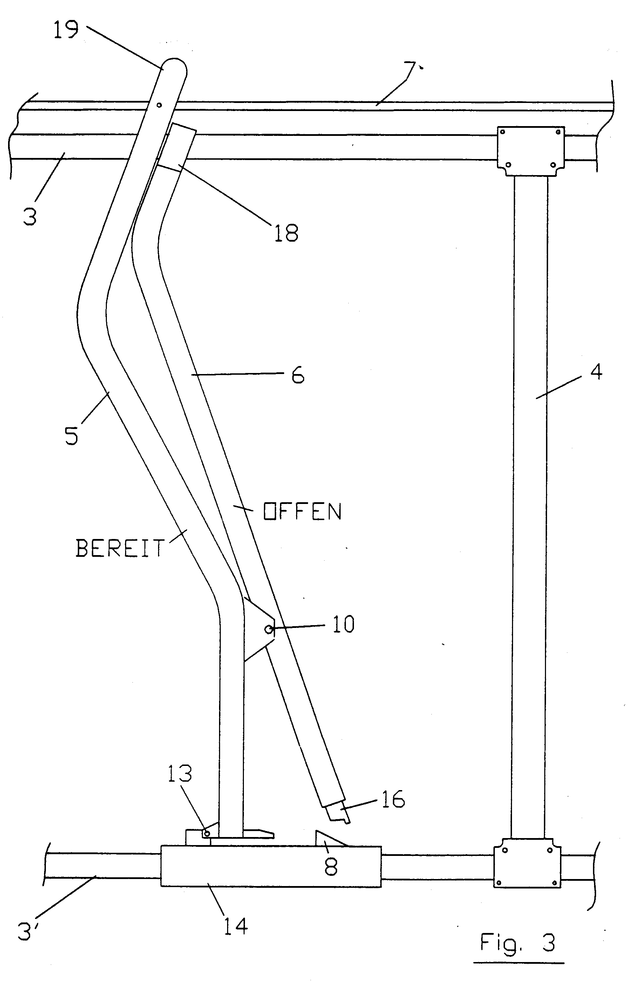

Wenn auf diese Art und Weise das Basisrohr 5 seine am weitesten nach links verschwenkte Position, die Offenstellung, einnimmt, und demzufolge auch das Fangrohr 6 seine Offenstellung, sitzt das Innenrohr 15 nach wie vor auf dem Vorsprung 12 auf, der Schwerpunkt S des Fangrohres 6 hat sich jedoch nicht nur nach links sondern auch nach unten bewegt. Dadurch ist es möglich, das Basisrohr 5 von seiner Offenstellung wieder etwas zurück in Richtung auf seine Bereitschaftsstellung zu bewegen, ohne daß das Fangrohr 6 diese Bewegung mitmacht, da die Gleitreibung zwischen dem unteren Ende des Innenrohres 15 des Fangrohres 6 und dem Vorsprung 12 des Basisrohres 5 zu gering ist, um das Fangrohr 6 zu bewegen. Vielmehr wird der Vorsprung 12 unter dem Innenrohr 15 herausgleiten und dadurch das Innenrohr 15 aus dem unteren Ende des Fangrohres 6 bis gegen die Oberseite des unteren Querrohres 3' bzw. die darübergeschobene Muffe 14 herabrutschen, wie in Figur 3 dargestellt.

Dies stellt bereits den Übergang von der Offenstellung des Basisrohres 5 in seine Bereitschaftsstellung dar, die vollständig dann erreicht ist, wenn das Basisrohr 5 noch weiter nach rechts verschwenkt wird, bis sein oberer Teil am oberen Teil des Fangrohres 6 anliegt, welches durch die Bewegung des Basisrohres 5 im wesentlichen unverändert blieb, bis auf die Verlagerung der Lagerstelle 10 zwischen Fangrohr 6 und Basisrohr 5 geringfügig nach rechts oben.

Ausgehend von der nun in Figur 3 dargestellten Bereitschaftsstellung des Basisrohres 5, in der sich das Fangrohr 6 noch in der Offenstellung befindet, durch das Vieh das untere Endedes Fangrohres 6 nach links und dadurch das Fangrohr 6 wiederum über die Auflaufschräge der Nase 8 hinweg in seine arretierte Schließstellung verbracht wird, also wieder die in Figur 1 dargestellte Position.

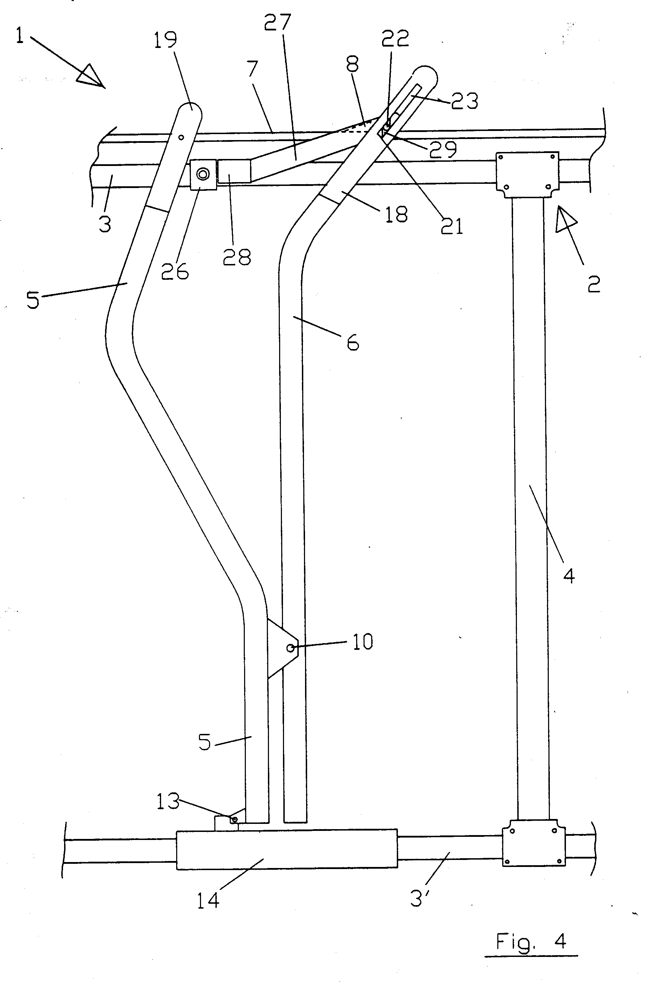

Die Fig. 4 bis 6 unterscheiden sich von den Fig. 1 bis 3 dadurch, daß die Verriegelung des in die Schließstellung verbrachten Fangrohres 6 nicht an dessen unteren, sondern an dessen oberem Ende stattfindet. Die Bewegungsphasen von Fangrohr 6 und Basisrohr 5 sind ansonsten übereinstimmend gleich.

Die Verriegelung findet nun zwischen dem oberen Ende des Fangrohres 6, welches in Form einer U-Gabel 18 ausgebildet ist, und der Steuerstange 7 bzw. dem oberen Querrohr 3 statt. Das obere Querrohr 3 weist lediglich einen Offenanschlag 26 auf, der die Offenstellung des Fangrohres 6 begrenzt. Bei dem Offenanschlag 26 handelt es sich um eine auf das obere Querrohr 3 aufgeschobene und durch Klemmschraube fixierte Muffe.

Die Nase 8, durch die die Verriegelung in der Schließstellung eintritt, befindet sich bei dieser Lösung auf der Oberseite der Steuerstange 7, weswegen sich die Schenkel der U-Gabel 18 seitlich beidseits über die Steuerstange 7 hinaus nach oben erstrecken.

Weiterhin ist in Fig. 4 am Einsperrgitter 1 eine Sperrstange 27 vorhanden, welche zwischen dem Einsperrgitter 1 und dem Fangrohr 6 in der Schließstellung einsetzbar ist, so daß das Fangrohr 6 nicht in die Offenstellung verbracht werden kann.

Diese Sperrstange 27 wirkt mit dem Offenanschlag 26, der auf dem oberen Querrohr 3 fixiert ist, zusammen.

Die Sperrstange 27 weist dabei ein Flacheisen auf, an dessen hinteren Ende ein U-Profil 28 befestigt ist, welches auf das obere Querrohr 3 angrenzend an den Offenanschlag 26 aufgelegt werden kann und von dem das Flacheisen schräg nach oben zum Fangrohr 6 verläuft.

In das vordere Ende des Flacheisens der Sperrstange 27 ist dabei von unten her ein Schlitz 29 eingearbeitet, in dem der Querbolzen 22 bzw. die Achse 30 der Klappe 24 eingreifen und damit das Fangrohr 6 trotz Offenstellung des Basisrohres 5 in der Schließstellung halten kann.

Das obere Ende des Fangrohres 6 ist dabei so gekröpft, daß es in seiner Schließstellung eine tiefere Position einnimmt als in seiner Offenstellung. Wie die Fig. 4 bis 6 zeigen, kann als Verriegelungselement gegenüber der Nase 8 an der Steuerstange 7 entweder ein Querbolzen 22 verwendet werden, der durch fluchtende, etwa senkrecht verlaufende Langlöcher 23 in den parallel zueinander liegenden Holmen der U-Gabel 18 am oberen Ende des Fangrohres 6 in der Höhe verschiebbar ist oder durch eine Klappe 24, die zwischen diesen Holmen um eine Schwenkachse 30 schwenkbar gelagert ist.

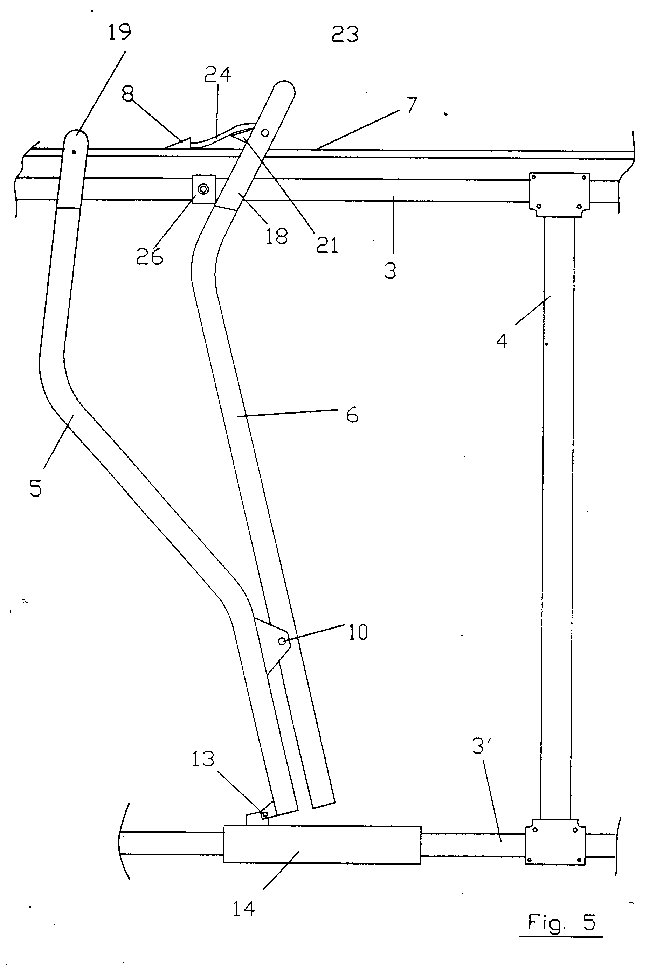

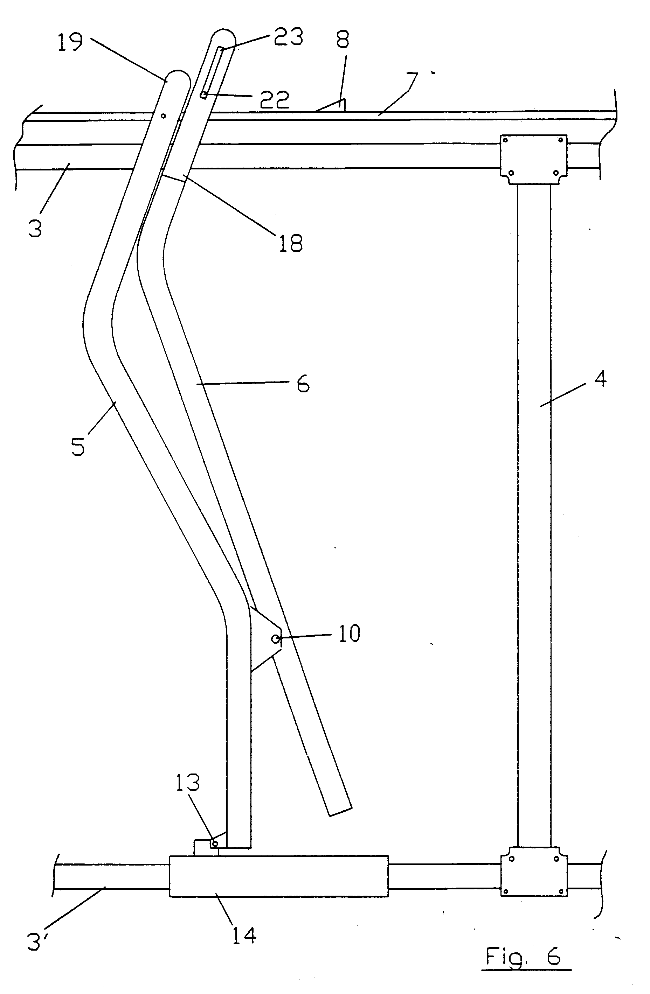

Wichtig ist dabei, daß das Verriegelungselement, von dem in den Fig. 4 und 6 die Lösung aus Querbolzen 22 und Langloch 23 und in Fig. 5 die Klappe 24 dargestellt ist, einen Anschlag 21 aufweisen, der die tiefste Lage dieses Verriegelungselementes begrenzt. Beim Querbolzen 22 ist dies das untere Ende des Langloches 23, während bei der Klappe 24 dies ein körperlicher Anschlag 21 gegenüber einem oder beiden Holmen der U-Gabel 18 des Fangrohres 6 ist.

Aufgrund der Bogenbewegung, die das Fangrohr 6 mit seinem oberen Ende zwischen der Offenstellung und der Schließstellung vollzieht, gleitet beim Bewegen von der Offenstellung in die Schließstellung das Verriegelungselement, also die Klappe 24 oder der Querbolzen 22, beim Überfahren der Nase 8 an deren Schräge hoch und rastet hinter deren senkrechter Anschlagfäche ein.

Ein Öffnen des Fangrohres 6, also ein Zurückbewegen in die Offenstellsung ist nur durch aktives Anheben dieses Verriegelungselementes möglich, wozu das Vieh nicht in der Lage ist.

Eine weitere Möglichkeit der Öffnung besteht darin, das Basisrohr 5 von der Bereitschaftstellung, in der es sich in den Fig. 4 und 6 befindet, zurück in die Offenstellung nach links zu verschwenken und dadurch die Steuerstange 7 mitsamt der Nase 8 von dem Verriegelungselement des Fangrohres 6 zurückzuziehen.

Dadurch ist es möglich, nun das Fangrohr 6 nach links in seine Offenstellung zu verschwenken, wobei ersichtlich ist, daß dabei die Höhenlage des Verriegelungselementes ausschlaggebend ist. Denn die tiefste Lage des Verriegelungselementes muß so hoch gewählt sein, daß der Anstieg des in seiner tiefsten Lage befindlichen Verriegelungselementes (Klappe 24 oder Querbolzen 22), der durch die nach oben gerichtete bogenförmige Schwenkbewegung eintritt, ausreicht, um das Verriegelungselement über die nun an einer anderen Position befindlichen Nase 8 hinwegzuheben. Nun befindet sich auch das Fangrohr wieder in der Offenstellung und kann - nach Verbringen des Basisrohres 5 in die Bereitschaftstellung - wieder durch das Vieh selbsttätig in die verriegelte Schließstellung verbracht werden.

## Patentansprüche

1. Einsperrgitter (1) für Viehställe, zum Einsperren des Tieres am Hals in der Freßposition in seiner Box, wobei das Einsperrgitter außer einem Rahmen, der wenigstens ein durchgehendes, waagerechtes Rohr (3, 3') sowie feste senkrechte Rohre (4) aufweist, die in jeder Box als Gegenhalter dienen, je Box ein verschwenkbar gelagertes Fangrohr (6) aufweist, daß das Fangrohr (6) in seiner Offenstellung in den Freiraum zum Gegenhalter hineinragt und die Lagerachsen des Fangrohres (6) senkrecht zur Ebene des Einsperrgitters (1) verlaufen, sowie wenigstens eine im Bereich eines oberen waagerechten Rohres (3) angeordnete, über mehrere Boxen sich erstreckende Steuerstange (7) zur Ansteuerung des Einsperrgitters,
mit je Box einem am unteren Ende verschwenkbar gelagerten und von einer Bereitschafts- in eine Offenstellung bewegbaren Basisrohr (5), an welchem das Fangrohr (6) gelagert ist, wobei sich die Lagerung des Fangrohres (6) am Basisrohr (5) oberhalb des schräg in den Freiraum zum Gegenhalter hineinragenden Endes des Fangrohres (6) befindet,
- das Einsperrgitter (1) nur eine Steuerstange (7) aufweist
- die oberen Enden der Fangrohre (6) mittels Führungselementen entlang des oberen Querrohres (3) verschiebbar geführt sind,
- im Bewegungsweg des Fangrohres (6) zwischen dessen Offen- und Schließstellung eine Nase (8) angeordnet ist, die das Fangrohr (6) in der Schließstellung hält,
- durch Bewegung der Steuerstange (7) das Fangrohr (6) die Nase (8) in Richtung auf seine Offenstellung überwindet
**dadurch gekennzeichnet, daß**
- die Steuerstange (7) mit den oberen Enden der Basisrohre (5) gelenkig verbunden ist und
- die Überwindung der Nase (8) durch das Fangrohr (6) in Richtung auf dessen Offenstellung mittels der Bewegung des Basisrohres (5) von seiner Bereitschafts- in seine Offenstellung erfolgt.

2. Einsperrgitter nach Anspruch 1,
**dadurch gekennzeichnet, daß**
die Nase (8) im Bewegungsweg des unteren Endes (9) des Fangrohres (6) liegt, das Fangrohr (6) unterhalb der Lagerung (10) am Basisrohr (5) längenveränderlich ausgebildet ist und das untere Ende (11) des Basisrohres (5) auf der Seite des Fangrohres (6) einen Vorsprung (12) aufweist, auf dem die Stirnfläche des unteren Endes (9) des Fangrohres (6) bei Parallellage von Basisrohr (5) und Fangrohr (6) aufsitzen kann.

3. Einsperrgitter nach einem der vorhergehenden Ansprüche,
**dadurch gekennzeichnet, daß**
im unteren Ende (9) des Fangrohres (6) ein Innenrohr (15) längsverschieblich angeordnet ist, welches aus dem unteren Ende (9) des Fangrohres (6) hervorragen kann.

4. Einsperrgitter nach einem der vorhergehenden Ansprüche,
**dadurch gekennzeichnet, daß**
das untere Ende (16) des Innenrohres (15) wenigstens teilweise vom Basisrohr (5) aus nach außen unten abgeschrägt ist und der Vorsprung (12) am Basisrohr (5) analog ausgebildet ist, so daß das Herabgleiten der Stirnfläche (17) des Innenrohres (5) vom Vorsprung (12) erleichtert wird.

5. Einsperrgitter nach Anspruch 1,
**dadurch gekennzeichnet, daß**
die Nase (8) im Bewegungsweg des oberen Endes des Fangrohres (6) an der Steuerstange (7) ausgebildet ist und ein mit der Nase (8) zusammenwirkende Riegelelement des Fangrohres (6) so beweglich ist, daß es die Nase überlaufen und dahinter einrasten kann, wenn das Basisrohr (5) in der Bereitschaftsstellung ist und daß es durch einen Anschlag (21) gegenüber dem Fangrohr (6) so nach unten begrenzt wird, daß es sich in der Offenstellung ausserhalb des Wirkungsbereiches der Nase (8) befindet.

6. Einsperrgitter nach Anspruch 5,
**dadurch gekennzeichnet, daß**
die Nase (8) auf der Oberseite der Steuerstange (7) ausgebildet ist und als Riegelelement ein Querbolzen (22) in Langlöchern (23) verwendet wird, wobei die Langlöcher (23) in den Holmen der U-Gabel (18) des Fangrohres (6) ausgebildet ist, und der Querbolzen (22) in dem im wesentlichen senkrecht verlaufenden Langloch (23) verschiebbar ist und als Anschlag (21) das untere Ende des Langloches (23) dient.

7. Einsperrgitter nach einem der Ansprüche 5 oder 6,
**dadurch gekennzeichnet, daß**
die Nase (8) auf der Oberseite der Steuerstange (7) ausgebildet ist und das als Riegelelement eine Klappe (24) eingesetzt ist, die in der U-Gabel (18) des Fangrohres (6) schwenkbar gelagert ist und etwa waagerecht gegen die Nase (8) abstrebt, und als Anschlag (21) eine Auflage (21') für die Klappe (24) gegenüber der U-Gabel (18) dient.

8. Einsperrgitter nach Anspruch 7,
**dadurch gekennzeichnet, daß**
das Einsperrgitter (1) eine Sperrstange (27) umfaßt, welche zwischen dem Einsperrgitter (1) und dem Fangrohr (6) in der Schließstellung einsetzbar ist, so daß das Fangrohr (6) nicht in die Offenstellung verbracht werden kann.

9. Einsperrgitter nach Anspruch 8,
**dadurch gekennzeichnet, daß**
am oberen Querrohr (3) ein Offen-Anschlag (26) verschiebbar befestigt ist, der das Fangrohr (6) in seiner Offenstellung begrenzt.

10. Einsperrgitter nach einem der vorhergehenden Ansprüche,
**dadurch gekennzeichnet, daß**
die Sperrstange (27) ein Flacheisen umfaßt, an dessen hinterem Ende ein U-Profil (28) befestigt ist, welches auf das obere Querrohr (3) angrenzend an den Offen-Anschlag (26) aufgelegt werden kann und von dem das Flacheisen (27) schräg nach oben zum Fangrohr (6) verläuft und in das Vorderende des Flacheisens von unten her ein Schlitz (29) eingearbeitet ist, in dem der Querbolzen (22) bzw. die Achse (30) der Klappe (24) eingreifen und damit das Fangrohr (6) trotz Offenstellung des Basisrohres (5) in der Schließstellung halten kann.

11. Einsperrgitter nach einem der Ansprüche 1 oder 5 bis 10,
**dadurch gekennzeichnet, daß**
das Basisrohr (5) im Bereich der Lagerung (10) zum Fangrohr (6) hin eine konvexe Krümmung aufweist.

12. Einsperrgitter nach einem der Ansprüche 1 oder 5 bis 11,
**dadurch gekennzeichnet, daß**
das Basisrohr (5) auf seiner vom Fangrohr (6) abgewandten Seite am unteren Ende mittels einer Lagerung (13) an einer Muffe (14) schwenkbar gelagert ist, und die Muffe (14) über das untere Querrohr (3') des Rahmens (2) schiebbar und fixierbar ist sowie die Nase (8) trägt.

13. Einsperrgitter nach einem der vorhergehenden Ansprüche,
**dadurch gekennzeichnet, daß**
das obere Ende des Basisrohres (5) zum Fangrohr (6) hin gekröpft ist, so daß bei einer Bewegung des Basisrohres (5) von seiner Offenstellung in seine Bereitschaftsstellung das Fangrohr (6) in seiner Offenstellung bleibt und die oberen Enden des Fangrohres (6) und des Basisrohres (5) etwa parallel zueinander verlaufen.

14. Einsperrgitter nach einem der vorhergehenden Ansprüche,
**dadurch gekennzeichnet, daß**
in der Offenstellung der Schwerpunkt des Fangrohres (6) eine niedrigere Position einnimmt als während der Bewegungsphasen bis in seine Schließstellung, in dem wenigstens 2/3 der Länge des Fangrohres (6) im unteren Bereich gerade ausgebildet ist und in der Schließstellung senkrecht steht, sowie die Lagerung (10) zwischen dem Basisrohr (5) und dem Fangrohr (6) sich in der unteren Hälfte des Fangrohres (6) befindet.

## Claims

1. A locking-in grid (1) for livestock sheds, for locking in the animal at the neck in the eating position in its stall, wherein the locking-in grid besides a frame which has at least one continuous horizontal tube (3, 3') and fixed vertical tubes (4) which serve in each stall as a co-operating holder, has for each stall a pivotably mounted retainer tube (6), the retainer tube (6) projects in its open position into the free space relative to the co-operating holder and the mounting axes of the retainer tube (6) extend perpendicularly to the plane of the locking-in grid (1), and at least one control bar (7) for actuation of the locking-in grid, the control bar being arranged in the region of an upper horizontal tube (3) and extending over a plurality of stalls,
comprising for each stall a base tube (5) which is mounted pivotably at the lower end and which is movable from a readiness position into an open position and on which the retainer tube (6) is mounted, wherein the mounting of the retainer tube (6) on the base tube (5) is above the end of the retainer tube (6), which projects inclinedly into the free space relative to the co-operating holder,
- the locking-in grid (1) has only one control bar (7),
- the upper ends of the retainer tubes (6) are guided displaceably along the upper transverse tube (3) by means of guide elements,
- arranged in the path of movement of the retainer tube (6) between the open and closed positions thereof is a protrusion (8) which holds the retainer tube (6) in the closed position, and
- the retainer tube (6) surmounts the protrusion (8) in a direction towards its open position by movement of the control bar (7),
characterised in that
- the control bar (7) is hingedly connected to the upper ends of the base tubes (5), and
- the protrusion (8) is surmounted by the retainer tube (6) in a direction towards the open position thereof by virtue of the movement of the base tube (5) from its readiness position into its open position.

2. A locking-in grid according to claim 1 characterised in that the protrusion (8) is disposed in the path of movement of the lower end (9) of the retainer tube (6), the retainer tube (6) is of a variable-length construction beneath the mounting (10) on the base tube (5) and the lower end (11) of the base tube (5) has on the side of the retainer tube (6) a projection (12) on which the end surface of the lower end (9) of the retainer tube (6) can rest in the parallel position of the base tube (5) and the retainer tube (6).

3. A locking-in grid according to one of the preceding claims characterised in that arranged longitudinally displaceably in the lower end (9) of the retainer tube (6) is an inner tube (15) which can project from the lower end (9) of the retainer tube (6).

4. A locking-in grid according to one of the preceding claims characterised in that the lower end (16) of the inner tube (15) is at least partially bevelled outwardly and downwardly from the base tube (5) and the projection (12) on the base tube (5) is of a similar configuration so that the movement by which the end surface (17) of the inner tube (5) slides off the projection (12) is facilitated.

5. A locking-in grid according to claim 1 characterised in that the protrusion (8) is provided in the path of movement of the upper end of the retainer tube (6) on the control bar (7) and a locking element of the retainer tube (6), which cooperates with the protrusion (8), is movable in such a way that it can pass over the protrusion and latch therebehind when the base tube (5) is in the readiness position and that it is so limited downwardly by an abutment (21) relative to the retainer tube (6) that in the open position it is outside the region of action of the protrusion (8).

6. A locking-in grid according to claim 5 characterised in that the protrusion (8) is provided on the top side of the control bar (7) and the locking element is a transverse pin (22) in slots (23), wherein the slots (23) are provided in the limbs of the U-shaped fork (18) of the retainer tube (6), and the transverse pin (22) is displaceable in the substantially perpendicularly extending slot (23) and the lower end of the slot (23) serves as the abutment (21).

7. A locking-in grid according to one of claims 5 and 6 characterised in that the protrusion (8) is provided on the top side of the control bar (7) and the locking element is a flap (24) which is mounted pivotably in the U-shaped fork (18) of the retainer tube (6) and which bears substantially horizontally against the protrusion (8) and a support (21') for the flap (24) with respect to the U-shaped fork (18) serves as the abutment (21).

8. A locking-in grid according to claim 7 characterised in that the locking-in grid (1) includes a locking bar (27) which can be inserted between the locking-in grid (1) and the retainer tube (6) in the closed position so that the retainer tube (6) cannot be moved into the open position.

9. A locking-in grid according to claim 8 characterised in that an open abutment (26) is displaceably secured to the upper transverse tube (3), the open abutment limiting the retainer tube (6) in its open position.

10. A locking-in grid according to one of the preceding claims characterised in that the locking bar (27) includes a flat bar member, to the rear end of which is fixed a U-shaped member (28) which can be applied to the upper transverse tube (3) adjoining the open abutment (26) and from which the flat bar member (27) extends inclinedly upwardly to the retainer tube (6) and provided in the front end of the flat bar member from below is a slot (29) in which the transverse pin (22) or the axis member (30) of the flap (24) engage and can thus hold the retainer tube (6) in the closed position in spite of the open position of the base tube (5).

11. A locking-in grid according to one of claims 1 or 5 to 10 characterised in that the base tube (5) has a convex curvature in the region of the mounting (10) towards the retainer tube (6).

12. A locking-in grid according to one of claims 1 or 5 to 11 characterised in that on its side remote from the retainer tube (6) at the lower end the base tube (5) is pivotably mounted by means of a mounting (13) on a sleeve (14) and the sleeve (14) is slidable and fixable over the lower transverse tube (3') of the frame (2) and carries the protrusion (8).

13. A locking-in grid according to one of the preceding claims characterised in that the upper end of the base tube (5) is cranked towards the retainer tube (6) so that upon a movement of the base tube (5) from its open position into its readiness position the retainer tube (6) remains in its open position and the upper ends of the retainer tube (6) and the base tube (5) extend in approximately parallel relationship.

14. A locking-in grid according to one of the preceding claims characterised in that in the open position the centre of gravity of the retainer tube (6) assumes a lower position than during the phases of movement into its closed position, in that at least two-thirds of the length of the retainer tube (6) is straight in the lower region and is disposed vertically in the closed position, and the mounting (10) between the base tube (5) and the retainer tube (6) is in the lower half of the retainer tube (6).

## Revendications

1. Cornadis (1) pour étables afin de bloquer le cou de l'animal en position de pâture dans son boxe, le cornadis, présentant par boxe, outre un cadre qui comprend au moins un tube continu horizontal (3, 3') ainsi que des tubes verticaux fixes (4) servant de contre-appui dans chaque boxe, un tube d'emprisonnement (6) logé de manière pivotante, de sorte que le tube d'emprisonnement (6) pénètre, en position d'ouverture, dans l'espace disponible en direction du contre-appui et les axes d'appui du tube d'emprisonnement (6) s'étendent perpendiculairement au plan du cornadis (1), ainsi qu'au moins une barre de commande (7), disposée dans la zone d'un tube supérieur horizontal (3), s'étendant sur plusieurs boxes et prévue pour la commande du cornadis, cornadis comprenant par boxe, un tube de base (5), logé de manière pivotante à l'extrémité inférieure et mobile entre une position d'ouverture et une position d'attente, tube sur lequel est logé le tube d'emprisonnement (6), le logement du tube d'emprisonnement (6) se trouvant sur le tube de base (5), en amont de l'extrémité du tube d'emprisonnement (6), qui pénètre dans l'espace disponible en direction du contre-appui,
- le cornadis (1) ne présente qu'une barre de commande (7)
- les extrémités supérieures des tubes d'emprisonnement (6) sont guidées de manière coulissante le long du tube supérieur transversal (3) au moyen d'éléments de guidage,
- dans le trajet de déplacement du tube d'emprisonnement (6) entre sa position d'ouverture et de fermeture, est disposé un taquet (8) qui maintient le tube d'emprisonnement (6) en position de fermeture,
- en bougeant la barre de commande (7), le tube d'emprisonnement (6) surmonte le taquet (8) en se déplaçant vers sa position d'ouverture,
**caractérisé en ce que**
- la barre de commande (7) est reliée de manière articulée aux extrémités supérieures des tubes de base (5) et
- le tube d'emprisonnement (6) surmonte le taquet (8) en se dirigeant vers sa position d'ouverture par l'intermédiaire du déplacement du tube de base (5) de sa position d'attente à sa position d'ouverture.

2. Cornadis selon la revendication 1,
**caractérisé en ce que**
le taquet (8) se trouve dans le trajet de déplacement de l'extrémité inférieure (9) du tube d'emprisonnement (6), en ce que le tube d'emprisonnement (6) est conçu de manière variable en longueur en dessous du logement (10) sur le tube de base (5) et en ce que l'extrémité inférieure (11) du tube de base (5) présente, sur le côté du tube d'emprisonnement (6), une saillie (12) sur laquelle peut reposer la surface frontale de l'extrémité inférieure (9) du tube d'emprisonnement (6) quand le tube de base (5) et le tube d'emprisonnement (6) sont en position parallèle.

3. Cornadis selon l'une des revendications précédentes
**caractérisé en ce que**
dans l'extrémité inférieure (9) du tube d'emprisonnement (6), est disposé un tube interne (15) mobile dans le sens de la longueur qui peut dépasser à l'extrémité inférieure (9) du tube d'emprisonnement (6).

4. Cornadis selon l'une des revendications précédentes
**caractérisé en ce que**
l'extrémité inférieure (16) du tube interne (15) est chanfreinée en bas vers l'extérieur au moins partiellement à partir du tube de base (5) et en ce que la saillie (12), se trouvant sur le tube de base (5), est conçue de manière analogue afin de faciliter le glissement de la surface frontale (17) du tube interne (5) descendant de la saillie (12).

5. Cornadis selon la revendication 1,
**caractérisé en ce que**
le taquet (8) est prévu dans le trajet de déplacement de l'extrémité supérieure du tube d'emprisonnement (6) sur la barre de commande (7) et un élément de verrouillage du tube d'emprisonnement (6), coopérant avec le taquet (8), est mobile de manière à pouvoir passer au-dessus du taquet et à s'encliqueter derrière quand le tube de base (5) est en position d'attente et en ce que l'élément est limité vers le bas vis-à-vis du tube d'emprisonnement (6) par une butée (21) de manière à se trouver en position d'ouverture à l'extérieur de la zone d'action du taquet (8).

6. Cornadis selon la revendication 5
**caractérisé en ce que**
le taquet (8) se trouve sur la face supérieure de la barre de commande (7) et qu'un boulon transversal (22) fait office d'élément de verrouillage dans des trous oblongs (23), les trous oblongs (23) étant réalisés dans les chapeaux de la fourche en U (18) du tube d'emprisonnement (6) et le boulon transversal (22) étant mobile dans le trou oblong (23) s'étendant sensiblement à la verticale et l'extrémité inférieure du trou oblong (23) servant de butée (21).

7. Cornadis selon l'une des revendications 5 ou 6,
**caractérisé en ce que**
le taquet (8) est formé sur la face supérieure de la barre de commande (7) et qu'on a recours à un clapet (24) en tant qu'élément de verrouillage qui est logé de manière pivotante dans la fourche en U (18) du tube d'emprisonnement (6) et s'arc-boute approximativement horizontalement contre le taquet (8) et en ce qu'une surface d'appui (21') sert de butée (21) pour le clapet (24) vis-à-vis de la fourche en U (18).

8. Cornadis selon la revendication 7,
**caractérisé en ce que**
le cornadis (1) comprend une barre de verrouillage (27) qui peut être insérée en position de fermeture entre le cornadis (1) et le tube d'emprisonnement (6) de sorte que le tube d'emprisonnement (6) ne puisse pas être amené en position d'ouverture.

9. Cornadis selon la revendication 8,
**caractérisé en ce que**
sur le tube transversal supérieur (3) est fixée, de manière coulissante, une butée d'ouverture (26) qui limite le tube d'emprisonnement (6) en position d'ouverture.

10. Cornadis selon l'une des revendications précédentes,
**caractérisé en ce que**
la barre de blocage (27) comprend un acier plat à l'extrémité arrière duquel est fixé un profilé en U (28) qui peut être appliqué sur le tube transversal supérieur (3) de manière attenante à la butée d'ouverture (26) et depuis lequel l'acier plat (27) s'étend de manière inclinée vers le haut en direction du tube d'emprisonnement (6) et dans l'extrémité avant de l'acier plat est ménagée une fente (29) par le bas, dans laquelle le boulon transversal (22) respectivement l'axe (30) du clapet (24) peut s'engager et maintenir ainsi le tube d'emprisonnement (6) en position de fermeture malgré la position d'ouverture du tube de base (5).

11. Cornadis selon l'une des revendications 1 ou 5 à 10,
**caractérisé en ce que**
le tube de base (5) présente, dans la zone du logement (10), une courbure convexe dirigée vers le tube d'emprisonnement (6).

12. Cornadis selon l'une des revendications 1 ou 5 à 11,
**caractérisé en ce que**
le tube de base (5), sur sa face détournée du tube d'emprisonnement (6), est logé de manière pivotante, sur l'extrémité inférieure au moyen d'un palier (13) sur un manchon (14) et le manchon (14) peut être fixé de manière coulissante au-dessus du tube transversal inférieur (3') du cadre (2) et porte le taquet (8).

13. Cornadis selon l'une des revendications précédentes,
**caractérisé en ce que**
l'extrémité supérieure du tube de base (5) est coudée en direction du tube d'emprisonnement (6) si bien que lors d'un déplacement du tube de base (5) de sa position d'ouverture dans sa position d'attente, le tube d'emprisonnement (6) reste dans sa position d'ouverture et les extrémités supérieures du tube d'emprisonnement (6) et du tube de base (5) s'étendent à peu près parallèlement entre elles.

14. Cornadis selon l'une des revendications précédentes,
**caractérisé en ce que**
en position d'ouverture, le centre de gravité du tube d'emprisonnement (6) prend une position plus basse que pendant les phases de déplacement jusqu'à sa position de fermeture, dans laquelle au moins 2/3 de la longueur du tube d'emprisonnement (6) sont de forme rectiligne dans la zone inférieure et sont perpendiculaires en position de fermeture, ainsi que le palier (10) entre le tube de base (5) et le tube d'emprisonnement (6) se trouve dans la moitié inférieure du tube d'emprisonnement (6).
